# EUROPÄISCHE PATENTSCHRIFT

(11) **EP 2 205 454 B1**
(45) Veröffentlichungstag und Bekanntmachung des Hinweises auf die Patenterteilung: **02.03.2011**
(21) Anmeldenummer: 08787088.7
(22) Anmeldetag: 11.08.2008
(51) Int. Cl.: B60C 11/13

(54) **FAHRZEUGLUFTREIFEN**
PNEUMATIC VEHICLE TYRE
PNEUMATIQUE POUR VÉHICULE

(30) Priorität: 04.10.2007 DE 102007047497
(43) Veröffentlichungstag der Anmeldung: 14.07.2010
(73) Patentinhaber: Continental Reifen Deutschland GmbH, 30165 Hannover (DE)
(72) Erfinder: RITTWEGER, Stefan, 30163 Hannover (DE)
(74) Vertreter: Finger, Karsten
(86) Internationale Anmeldenummer: PCT/EP2008/060513
(87) Internationale Veröffentlichungsnummer: WO 2009/043631

(56) Entgegenhaltungen:
- EP-A- 1 810 849
- FR-A- 2 475 993
- GB-A- 2 014 091
- US-A1- 2001 027 835
- US-A1- 2003 024 621

## Beschreibung

Die Erfindung betrifft einen Fahrzeugluftreifen mit einem Laufstreifen mit Profilelementen, beispielsweise Profilblöcken, mit zumindest einem einspringenden Eckbereich, welcher zwischen zwei einen im Wesentlichen rechten Winkel einschließenden Blockflanken gebildet ist.

Fahrzeugluftreifen mit Laufstreifen mit Profilblöcken, welche einspringende Eckbereiche aufweisen, sind in unterschiedlichen Ausführungsvarianten bekannt. Die US-B-6,571,843 offenbart beispielsweise einen Fahrzeugluftreifen mit Profilblöcken mit einspringenden Eckbereichen, die sich in der Umfangsrichtung des Laufstreifens öffnen.

Es ist ferner bekannt, die einspringenden Eckbereiche von Profilblöcken abgerundet auszuführen, sodass keine exakte in radialer Richtung verlaufende Kante zwischen den beiden, die Ecke bildenden Flankenflächen vorliegt. Durch diese Maßnahme soll der Blockeckbereich stabilisiert werden, um einem Ausbilden von Kerben und Einrissen in den einspringenden Ecken der Blöcke entgegenzuwirken. Es ist jedoch für manche Profileigenschaften, beispielsweise die Griffeigenschaften, von Vorteil, möglichst viele Kanten zur Verfügung zu haben und zu erhalten. Darüber hinaus schränkt es die Gestaltungsmöglichkeiten eines Laufstreifens ein, wenn Eckbereiche mit Rundungen versehen werden müssen.

Der Erfindung liegt somit die Aufgabe zu Grunde, bei einem Fahrzeugluftreifen der eingangs genannten Art einspringende Eckbereiche an Profilblöcken ohne Rundungen zu stabilisieren und dabei präzise verlaufende Kanten zumindest im Neuzustand des Reifens zur Verfügung zu haben.

Gelöst wird die gestellte Aufgabe erfindungsgemäß dadurch, dass der einspringende Eckbereich durch ein im Eck positioniertes Stützelement stabilisiert ist, welches eine in Richtung Blockoberfläche spitzer werdende Gestalt mit zumindest einer ebenen Übergangsfläche zwischen den Flankenflächen aufweist.

Diese Stützelemente sind mitgeformte Gummikörper, die die Eckbereiche stabilisieren und so ausgelegt sein können, dass bei neuen Reifen die ursprüngliche Eckausführung vorhanden ist und bei zunehmendem Abrieb an der Profiloberfläche ineinander übergehende Kanten entstehen, die die erwünschte Scharfkantigkeit aufweisen.

Bei einer bevorzugten Ausführungsform der Erfindung weist das Stützelement eine pyramidenähnliche oder pyramidenstumpfähnliche Gestalt auf. Durch diese Form wird eine besonders vorteilhafte Stabilisierung der einspringenden Eckbereiche von Profilelementen erreicht. In diesem Zusammenhang ist es auch von Vorteil, wenn das Stützelement eine einzige, dreieckförmige oder trapezförmige Übergangsfläche zu den Flankenflächen aufweist. Diese Ausführungsform stellt besonders exakt verlaufende Kanten an der Laufstreifenoberfläche zur Verfügung.

Um die Profilelemente ausreichend zu stabilisieren, sollte die Übergangsfläche des Stützelementes mit der radialen Richtung einen Winkel in der Größenordnung von 15° bis 45° einschließen. Dabei ist es auch günstig, wenn das Stützelement, vom Nutgrund aus betrachtet, über mindestens zwei Drittel der radialen Erstreckung des Eckbereiches verläuft.

Sollte es sich als notwendig herausstellen, können die Übergänge zwischen dem Stützelement und den Flankenflächen verrundet werden. Diese lokalen Rundungen können derart klein dimensioniert sein, dass sie optisch kaum auffallen.

Weitere Merkmale, Vorteile und Einzelheiten der Erfindung werden nun anhand der Zeichnung, die schematisch mehrere Ausführungsbeispiele darstellt, näher beschrieben. Dabei zeigen
Fig. 1 eine Draufsicht auf zwei Profilblöcke in einem Laufstreifen eines Fahrzeugluftreifens,
Fig. 2 eine Ansicht eines einspringenden Eckbereiches einer der Profilblöcke aus Fig. 1 und
Fig.3 und Fig. 4 weitere Ausführungsvarianten der Erfindung anhand von Ansichten einspringender Ecken eines Proflblockes.

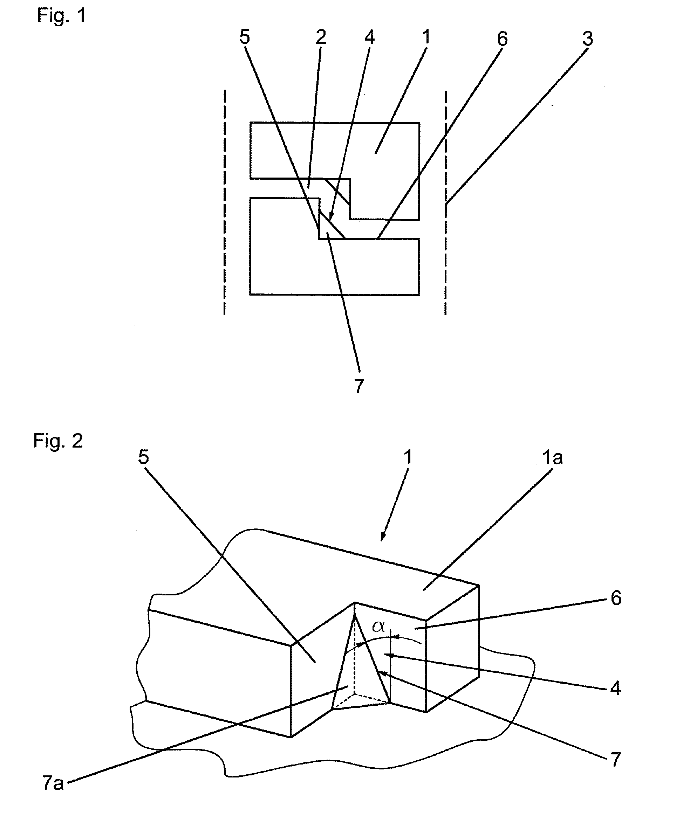

Fig.1 zeigt eine Draufsicht auf zwei Profilblöcke 1, wie sie beispielsweise in einem Laufstreifen eines Fahrzeugluftreifens beliebiger Bauart und Ausführung vorgesehen sein können. Zwischen den beiden Profilblöcken 1 verläuft eine Nut 2. Die gestrichelten Linien in Fig.1 deuten ebenfalls Nuten 3 an, die beispielsweise in Umfangsrichtung des Reifens verlaufen. Die paarweise angeordneten Blöcke 1 können mit gleichartig ausgeführten Blöcken eine in Umfangsrichtung umlaufende Blockreihe bilden. Die beiden Profilblöcke 1 weisen bei dem gezeigten Ausführungsbeispiel eine L-Form mit zwei Blockabschnitten auf, die miteinander einen rechten Winkel einschließen. Zwischen den Flankenflächen 5 und 6 der beiden Abschnitte ist ein einspringender Eckbereich 4 gebildet. Bei Profilen aus dem Stand der Technik werden derartige Eckbereiche üblicherweise stark verrundet ausgeführt, um im Betrieb des Reifens das Entstehen von Rissen und Kerben zu vermeiden.

Gemäß der Erfindung wird eine präzise und scharfkantige Ausführung der einspringenden Eckbereiche 4 ermöglicht und gleichzeitig ein Stabilisierungseffekt erzielt, sodass auf ein Abrunden verzichtet werden kann.

Fig. 2 zeigt eine Ansicht des einspringenden Eckbereiches 4 eines Profilblockes 1 aus Fig. 1, wobei mit 1a die Profilblockoberfläche bezeichnet ist. Die beiden, den einspringenden Eckbereich bildenden Flankenflächen 5 und 6 verlaufen von der Blockoberfläche 1a ausgehend in radialer Richtung bzw. im Wesentlichen in radialer Richtung. In der Ecke zwischen den Flankenflächen 5, 6 ist ein Stützelement 7 positioniert, welches zwischen den Flankenflächen 5, 6 eine dreieckförmige Übergangsfläche 7a bildet, deren eine Seite dem Nutgrund zugeordnet ist und deren dieser Seite gegenüberliegende Dreieckspitze bis an oder bis nahezu an die Blockprofiloberfläche 1a reicht. Bei der in Fig. 2 gezeigten Ausführungsform weist daher das Stützelement 7 im Wesentlichen die Form einer dreiseitigen Pyramide auf, deren Grundfläche dem Nutgrund zugeordnet ist und die mit zwei ihrer dreieckförmigen Mantelflächen an den Flankenflächen 5 und 6 anliegt. Die vom Stützelement 7 zu sehende dreieckförmige Übergangsfläche 7a verläuft unter einem Winkel α gegenüber der radialen Richtung, der größer ist als der Winkel, den die Flankenflächen 5 und 6 mit der radialen Richtung einschließen und zwischen 15° und 45° gewählt wird. Das Stützelement 7 bewirkt somit eine Stabilisierung des einspringenden Eckbereiches 4 und sorgt gleichzeitig dafür, dass zumindest im Neuzustand des Reifens der einspringende Eckbereich 4 in seiner ursprünglichen scharfkantigen Form vorliegt. Während des fortschreitenden Abriebes des Laufstreifens kommt von der Fläche 7a eine Kante zum Vorschein, die gemeinsam mit den Kanten der Flächen 5 und 6 präzise Ecken bildet.

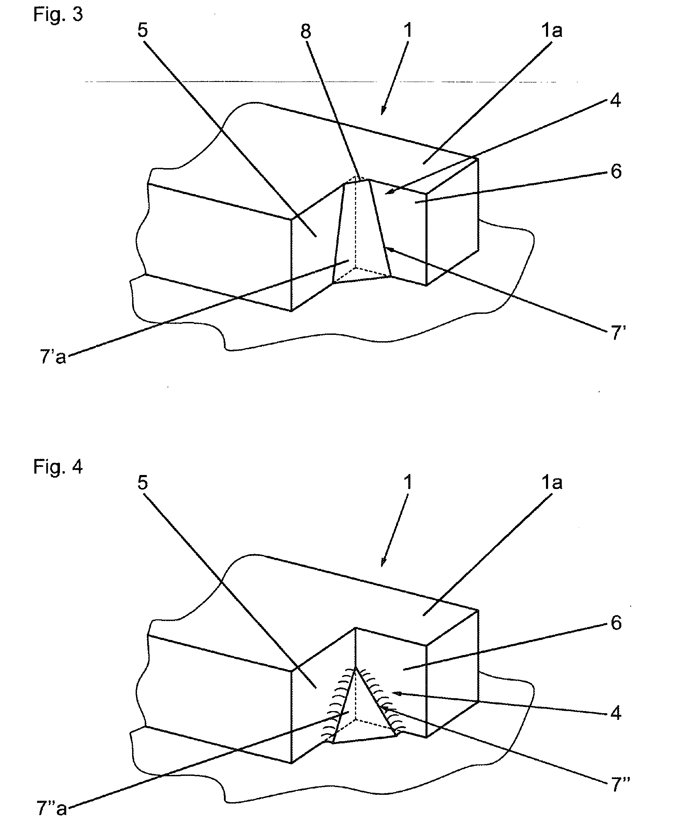

Bei der in Fig. 3 gezeigten Ausführungsvariante weist das Stützelement 7' annähernd die Gestalt einer abgestumpften, dreiseitigen Pyramide auf. Im Unterschied zur Ausführungsform gemäß Fig. 2 ist dadurch bereits im Neuzustand des Reifens im einspringenden Eckbereich 4 an der Blockoberfläche 1a eine kurze Verbindungskante 8 vorhanden, die die an der Blockoberfläche befindlichen Kanten der beiden Flankenflächen 5 und 6 miteinander verbindet und dabei jeweils einen stumpfen Winkel mit diesen Kanten einschließt. Das Stützelement 7' kann derart ausgeführt sein, dass diese beiden Winkel gleich groß sind. Die Übergangsfläche 7"a ist im Wesentlichen trapezförmig.

Bei der in Fig. 4 gezeigten Ausführungsvariante ist das Stützelement 7" ähnlich zu Fig. 2 annähernd in der Gestalt einer dreiseitigen Pyramide ausgeführt, mit einer dreieckförmigen Übergangsfläche 7"a zwischen den Flankenflächen 5 und 6. Bei dieser Ausführungsvariante ist der Übergang zwischen der Fläche 7"a und den beiden Flankenflächen 5 und 6 nach innen gerundet.

Um den Stabilisierungseffekt im erwünschten Ausmaß sicherzustellen, sollte das Stützelement 7, 7', 7" über mindestens zwei Drittel der radialen Blockerstreckung verlaufen.

Es sind auch andere Formen für das Stützelement möglich, insbesondere kann dieses mehrere Übergangsflächen zwischen den beiden Flankenflächen 5 und 6 aufweisen. Stützelemente können selbstverständlich auch in Eckbereichen angeordnet sein, deren Flankenflächen einen 90° übersteigenden oder unterschreitenden Winkel miteinander einschließen.

### Bezugszeichenliste

- 1: Profilblock
- 1a: Oberfläche
- 2: Nut
- 3: Nut
- 4: einspringender Eckbereich
- 5: Flanke
- 6: Flanke
- 7: Stützelement
- 7a: Übergangsfläche
- 7': Stützelement
- 7'a: Übergangsfläche
- 7": Stützelement
- 7"a: Übergangsfläche
- 8: Kante

## Patentansprüche

1. Fahrzeugluftreifen mit einem Laufstreifen mit Profilelementen, beispielsweise Profilblöcken (1), mit zumindest einem einspringenden Eckbereich (4), welcher zwischen zwei einen im Wesentlichen rechten Winkel einschließenden Blockflanken (5, 6) gebildet ist,
**dadurch gekennzeichnet,**
**dass** der einspringende Eckbereich (4) durch ein im Eck positioniertes Stützelement (7, 7', 7") stabilisiert ist, welches eine in Richtung Blockoberfläche spitzer werdende Gestalt mit zumindest einer ebenen Übergangsfläche (7a, 7'a, 7"a) zwischen den Flankenflächen (5, 6) aufweist.

2. Fahrzeugluftreifen nach Anspruch 1, **dadurch gekennzeichnet, dass** das Stützelement (7, 7', 7") eine pyramidenähnliche oder pyramidenstumpfähnliche Gestalt aufweist.

3. Fahrzeugluftreifen nach Anspruch 1 oder 2, **dadurch gekennzeichnet, dass** das Stützelement (7) eine einzige, dreieckförmige oder trapezförmige Übergangsfläche (7a, 7'a, 7"a) zu den Flankenflächen (5, 6) aufweist.

4. Fahrzeugluftreifen nach einem der Ansprüche 1 bis 3, **dadurch gekennzeichnet, dass** die Übergangsfläche(n) einen Winkel (α) von 15° bis 45° mit der radialen Richtung einschließt bzw. einschließen.

5. Fahrzeugluftreifen nach einem der Ansprüche 1 bis 4, **dadurch gekennzeichnet, dass** das Stützelement (7, 7', 7") vom Nutgrund aus betrachtet, über mindestens zwei Drittel der radialen Erstreckung des Eckbereiches (4) verläuft.

6. Fahrzeugluftreifen nach einem der Ansprüche 1 bis 5, **dadurch gekennzeichnet, dass** die Übergänge zwischen dem Stützelement (7") und den Flankenflächen (5, 6) verrundet sind.

## Claims

1. Pneumatic vehicle tyre with a tread rubber with profile elements, for example profile blocks (1), with at least one inwardly projecting corner region (4), which is formed between two block flanks (5, 6) substantially enclosing a right angle, **characterized in that** the inwardly projecting corner region (4) is stabilized by a supporting element (7, 7', 7 "), which is positioned in the corner and has a shape that becomes more pointed in the direction of the surface of the block and has at least one planar transitional area (7a, 7'a, 7"a) between the flank areas (5, 6).

2. Pneumatic vehicle tyre according to Claim 1, **characterized in that** the supporting element (7, 7', 7") has a pyramidal or frusto-pyramidal shape.

3. Pneumatic vehicle tyre according to Claim 1 or 2, **characterized in that** the supporting element (7) has a single, triangular or trapezoidal transitional area (7a, 7'a, 7"a) with respect to the flank areas (5, 6).

4. Pneumatic vehicle tyre according to one of Claims 1 to 3, **characterized in that** the transitional area(s) forms or form an angle (α) with the radial direction of 15° to 45°.

5. Pneumatic vehicle tyre according to one of Claims 1 to 4, **characterized in that**, as seen from the groove base, the supporting element (7, 7', 7") extends over at least two thirds of the radial extent of the corner region (4).

6. Pneumatic vehicle tyre according to one of Claims 1 to 5, **characterized in that** the transitions between the supporting element (7") and the flank areas (5, 6) are rounded.

## Revendications

1. Pneumatique pour véhicule comprenant une bande de roulement avec des éléments profilés, par exemple des blocs profilés (1), avec au moins une zone d'angle rentrante (4) qui est formée entre deux flancs de bloc (5, 6) formant un angle essentiellement droit, **caractérisé en ce que** la zone d'angle rentrante (4) est stabilisée par un élément support (7, 7', 7") positionné dans le coin, lequel présente une forme qui devient plus pointue en direction de la surface du bloc avec au moins une surface de transition plane (7a, 7'a, 7"a) entre les surfaces des flancs (5, 6).

2. Pneumatique pour véhicule selon la revendication 1, **caractérisé en ce que** l'élément support (7, 7', 7") présente une forme similaire à une pyramide ou similaire à une pyramide tronquée.

3. Pneumatique pour véhicule selon la revendication 1 ou 2, **caractérisé en ce que** l'élément support (7) présente une surface de transition (7a, 7'a, 7"a) unique, triangulaire ou trapézoïdale, vers les surfaces des flancs (5, 6).

4. Pneumatique pour véhicule selon l'une des revendications 1 à 3, **caractérisé en ce que** la ou les surfaces de transition forme(nt) un angle (α) de 15° à 45° avec la direction radiale.

5. Pneumatique pour véhicule selon l'une des revendications 1 à 4, **caractérisé en ce que** l'élément support (7, 7', 7"), vu depuis la base de la rainure, s'étend sur au moins deux tiers de l'étendue radiale de la zone d'angle (4).

6. Pneumatique pour véhicule selon l'une des revendications 1 à 5, **caractérisé en ce que** les transitions entre l'élément support (7") et les surfaces des flancs (5, 6) sont arrondies.
